# EUROPÄISCHE PATENTSCHRIFT

(11) **EP 2 290 272 B1**
(45) Veröffentlichungstag und Bekanntmachung des Hinweises auf die Patenterteilung: **30.05.2018**
(21) Anmeldenummer: 10168283.9
(22) Anmeldetag: 02.07.2010
(51) Int. Cl.: F16K 1/42, F16K 25/00, F02M 61/18

(54) **Kavitationserosionsoptimiertes Kugelsitzventil**
Cavitation erosion optimised ball seat valve
Siège de soupape sphérique à érosion par cavitation optimisée

(30) Priorität: 27.08.2009 DE 102009028943
(43) Veröffentlichungstag der Anmeldung: 02.03.2011
(73) Patentinhaber: Robert Bosch GmbH, 70442 Stuttgart (DE)
(72) Erfinder: Schnaufer, Axel, 75365, Calw (DE)

(56) Entgegenhaltungen:
- EP-A2- 1 013 919
- WO-A1-02/23036
- DE-A1-102006 034 111
- DE-A1-102007 004 553

## Beschreibung

### Technisches Gebiet

Die Erfindung betrifft ein Kugelsitzventil zur Einstellung eines Durchflusses eines fluiden Mediums, aufweisend einen Ventilsitz und ein abgerundetes Schließelement, insbesondere eine Ventilkugel, weiterhin aufweisend einen Einlauf mit einer Vordrossel, und einem zwischen der Vordrossel und dem Ventilsitz angeordneten Diffusor, wobei der Einlauf weiterhin eine Verengung aufweist.

### Stand der Technik

Ein derartiges Kugelsitzventil ist aus der DE 10 2007 004 553 A1 bekannt. Das in diesem Dokument beschriebene Kugelsitzventil wird insbesondere im Bereich der Einspritztechnik bei Kraftfahrzeugen eingesetzt. Konkret wird dieses Kugelsitzventil bei einem Hochdruckspeichereinspritzsystem (Common-Rail-System) genutzt, um den Hub eines Einspritzventilgliedes, welches Einspritzöffnungen öffnet oder schließt, zu steuern. Problematisch bei solchen Kugelsitzventilen, die insbesondere mit Drücken von einigen 1000 bar arbeiten, ist das Problem einer starken Erosion im Bereich des Ventilsitzes. Diese Erosion ist insbesondere auf eine Kavitation an der Vordrossel zurückzuführen, welche überwiegend außerhalb der Hubdrosselgrenze auftritt. Als Hubdrosselgrenze wird dabei die Grenze des Hubs des Kugelsitzventils bezeichnet, oberhalb derer sich der Durchfluss bei konstanten Druck vor und nach dem Kugelsitzventil nicht mehr ändert. Durch einen kegelförmigen Verengungsanschnitt des Diffusors im Bereich vor dem Ventilsitz wird beim Gegenstand des zuvor genannten Dokuments die auftretende Erosion vermindert. Dabei läuft der kegelförmige Verengungsabschnitt in eine Phase des Ventilsitz aus.

Der Erfindung liegt die Aufgabe zu Grunde, ein Kugelsitzventil bereitzustellen, bei dem die Gefahr einer Erosion im Bereich des Ventilsitzes weiter reduziert ist.

### Offenbarung der Erfindung

Dies wird dadurch erreicht, dass die Verengung einen Kegelstumpfabschnitt mit einem scharfkantigen Absatz auf der dem Ventilsitz zugewandten Seite aufweist. Dieser Ausgestaltung liegt die Erkenntnis zugrunde, dass während des Betriebs in der Vordrossel gewollt Dampf erzeugt wird. Der Dampf kondensiert dann in dem Diffusor. Hieraus resultiert prinzipbedingt die Kavitationserosionsgefahr am Ventilsitzbereich. Durch den erfindungsgemäßen Kegelstumpfabschnitt mit dem endseitigen scharfkantigen Absatz auf der dem Ventilsitz zugewandten Seite überspringt die Strömung diesen Hauptgefährdungsbereich. Durch den scharfkantigen Absatz wird dahinter am oberen Ende des Diffusors ein Totwassergebiet gebildet und damit eine Zone mit einem niedrigeren Druck. Es kommt also an den betreffenden Stellen wieder zur Dampfbildung und nicht zur Kondensation. Kondensationsgebiete und somit Kavitationserosion im Bereich des Ventilsitzes unterbleiben.

Erfindungsgemäß läuft der Kegelstumpfabschnitt absatzlos in den Diffusor aus. Dabei schließt der Kegelstumpfabschnitt mit dem Diffusor einen Winkel zwischen 5° und 25° ein. Dabei hat sich ein Winkel im Bereich von ca. 15° als optimal erwiesen. Durch diese Ausgestaltung wird der Fluidstrom, der den Diffusor in Richtung zu dem Ventilsitz durchströmt, strömungsphysikalisch bis zum Erreichen des Absatzes nur so beeinflusst, dass sich keine Ablösungen von der Kegelstumpfwand und daraus resultierende Verwirbelungen bilden. Die Länge des Kegelstumpfabschnittes beträgt von dem Auslauf in den Diffusor bis zu dem Absatz etwa 25 % der Länge des Diffusors von von der Vordrossel bis zu dem Auslauf.

Weiter ist erfindungsgemäß zwischen dem Absatz und dem Diffusorgrundkörper eine zylinderscheibenförmige Absatzwand angeordnet. Diese Absatzwand ist rechtwinklig zu der Diffusorlängsachse ausgerichtet bzw. angeordnet. Dabei weist die Absatzwand eine Breite auf, die zwischen 10 % und 40 % des Radius des Diffusors beträgt. Dabei hat sich ein Wert von ca. 25 % als besonders vorteilhaft erwiesen.

In Weiterbildung der Erfindung weist der Diffusor oberhalb des Kegelstumpfabschnittes einen Diffusorventilsitzabschnitt mit einem zumindest angenähert dem Diffusorgrunddurchmesser entsprechenden Durchmesser auf. Dieser so gebildete Diffusorventilsitzabschnitt läuft fasenlos in den Ventilsitz aus. Durch diese Ausgestaltung wird im Bereich unterhalb des Ventilsitzes ein Totwassergebiet erzeugt, dass wirkungsvoll die Gefahr der Kavitationserosion im Bereich des Ventilsitzes verringert.

Zusammenfassend lassen sich durch die erfindungsgemäße Ausgestaltung zwei Effekte bzw. Mechanismen darstellen. Zunächst wird eine gezielte Unterdruckerzeugung - und damit Dampferzeugung an den gefährdeten Bereichen erreicht. Weiterhin wird eine gezielte Strömungsführung zur Umgehung der potenziell gefährdeten Bereiche dargestellt. Beides verringert wirkungsvoll die Gefahr einer Kavitationserosion im Bereich des Ventilsitzes.

Weitere vorteilhafte Ausgestaltungen der Erfindung sind der Zeichnungsbeschreibung zu entnehmen, in der ein in den Figuren dargestelltes Ausführungsbeispiel näher beschrieben ist.

### Kurze Beschreibung der Zeichnungen

Es zeigen:
- Figur 1: eine Übersichtsdarstellung des erfindungsgemäß ausgestalteten Kugelsitzventils und
- Figur 2: eine Detailansicht des Kugelsitzventils im Bereich der Verengung unterhalb des Ventilsitzes.

### Ausführungsform der Erfindung

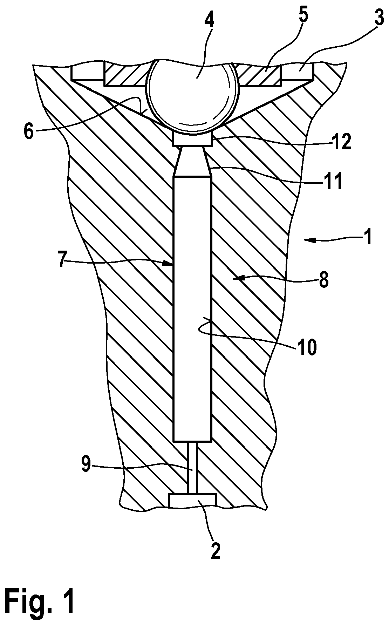

Figur 1 zeigt einen Teilschnitt durch ein elektrisch betätigtes Einspritzventil, das zur Verwendung in einer Kraftstoffeinspritzanlage einer Brennkraftmaschine bestimmt ist. Diese Kraftstoffeinspritzanlage ist mit einem Kraftstoffhochdruckspeicher ausgerüstet, der durch eine Hochdruckförderpumpe kontinuierlich mit Kraftstoff versorgt wird und von dem aus dieser Kraftstoff über einzelne elektrisch gesteuerte Einspritzventile den einzelnen Brennräumen der Brennkraftmaschine zugeführt werden kann. Dabei herrscht in dem Hochdruckspeicher ein Druck im Bereich von ca. 2000 bar und dementsprechend muss die Zumesseinrichtung in dem Einspritzventil einen solchen Druck sicher beherrschen können. Zu diesem Zweck wird ein Schließelement 4, das im Ausführungsbeispiel eine Ventilkugel ist, mittels eines Aktors 5 in einen kegelförmigen Ventilsitz 6 gepresst bzw. von diesem abgehoben.

Das fluide Medium, das im Ausführungsbeispiel also Kraftstoff ist, wird über eine Bohrung 2 dem Einspritzventil zugeführt. Dabei steht die Bohrung 2 mit einem-Entlastungsraum 3 über einen Einlauf 7 in Verbindung. Der Einlauf 7 in dem Ventilkörper 8 ist Bestandteil des Kugelsitzventils 1.

Der Einlauf 7 weist zunächst auf der der Bohrung 2 zugewandten Seite eine zylinderförmige Vordrossel 9 auf, an die sich zum Ventilsitz 6 hin ein zylindrischer Diffusor 10 anschließt. An dem Übergang zwischen der Vordrossel 9 und dem Diffusor 10 kann eine leichte Abschrägung vorgesehen sein. Durch den Querschnitt der Vordrossel 9 wird der Durchfluss oberhalb der Hubdrosselgrenze durch das Kugelsitzventil 1 wesentlich beeinflusst und eingestellt.

Bei dem Aktor 5 kann es sich beispielsweise um einen Magnetaktor handeln, bei dem über einen Elektromagneten gezielt die Lage des Schließelements 4 eingestellt wird.

Anschließend an den Diffusor 10 weist der Einlauf 7 in Richtung zu dem Ventilsitz 6 einen Kegelstumpfabschnitt 11 auf, der wiederum in einen Diffusorventilsitzabschnitt 12 übergeht. Der Diffursorventilsitzabschnitt 12 grenzt dabei direkt an den Ventilsitz 6 an bzw. geht in diesen über.

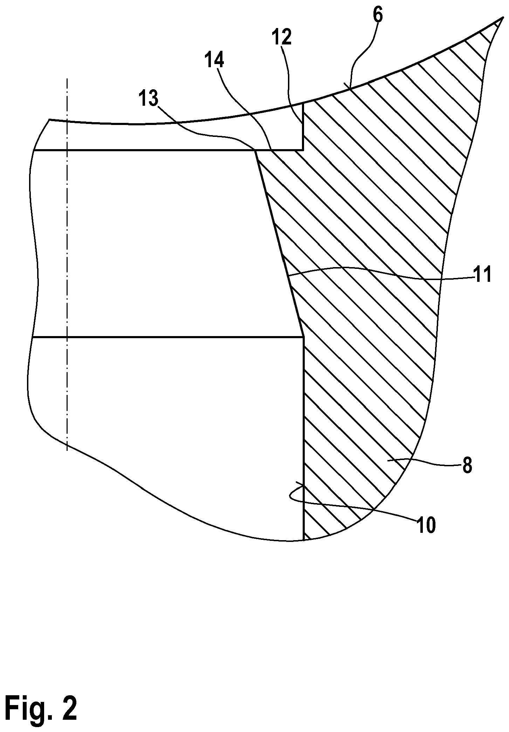

Dieser Bereich des Kugelsitzventils 1 ist in der Detailansicht gemäß Figur 2 dargestellt. Der Kegelstumpfabschnitt 11 läuft absatzlos in den Diffusor 10 aus und schließt mit diesem einen Winkel insbesondere im Bereich von 15° ein. Auf der dem Ventilsitz 6 bzw. dem Diffusorventilsitzabschnitt 12 zugewandten Seite weist der Kegelstumpfabschnitt 11 einen scharfkantigen Absatz 13 auf, der über eine zylinderscheibenförmige Absatzwand 14 mit dem Diffusorventilsitzabschnitt 12 verbunden ist. Die Absatzwand 14 ist zumindest angenähert rechtwinklig zu der Diffursorlängsachse ausgerichtet und weist eine Breite auf, die ca. 25% des Radius des Diffusors 10 beträgt. Der Durchmesser des Diffusorventilsitzabschnittes 12 entspricht zumindest angenähert dem Durchmesser des Diffusors.

Der erfindungsgemäßen Ausgestaltung liegen folgende Grundlagen zugrunde. Während des Betriebes wird in der Vordrossel 9 gewollt Dampf erzeugt. Der Dampf kondensiert dann bereits in dem Diffusor (Druckerhöhung im Staupunkt der Ventilkugel). Hierdurch resultiert die Kavitationserosionsgefahr im Bereich des Ventilsitzes 6 des Kugelsitzventils 1. Durch die dargestellte Ausgestaltung überspringt nun die Strömung den Hauptgefährdungsbereich der Kavitationserosion im Bereich des Einlaufs 7 angrenzend an den Ventilsitz 6, indem die Strömung an dem Absatz 13 abreist und sich im Bereich des Diffusorventilsitzabschnittes 12 durch die Absatzwand 14 ein Totwassergebiet und damit niedriger Druck bildet. Es kommt also an den betreffenden Stellen wieder zur Dampfbildung und nicht zur Kondensation. Kondensationsgebiete und somit Kavitationserosion im Bereich des Ventilsitzes 6 unterbleiben. Auch bleibt der Massenstrom durch die Vordrossel 9 konstant.

## Patentansprüche

1. Kugelsitzventil zur Einstellung eines Durchflusses eines fluiden Mediums aufweisend einen Ventilsitz (6) und ein abgerundetes Schließelement (4), insbesondere eine Ventilkugel, weiterhin aufweisend einen Einlauf (7) mit einer Vordrossel (9) und einen zwischen der Vordrossel (9) und dem Ventilsitz (6) angeordneten Diffusor (10), wobei der Einlauf (7) weiterhin eine Verengung aufweist,
**dadurch gekennzeichnet, dass** die Verengung einen Kegelstumpfabschnitt (11) mit einem scharfkantigen Absatz (13) auf der dem Ventilsitz (6) zugewandten Seite aufweist, an welcher Seite der Kegelstumpfabschnitt (11) in einen zylindrischen Diffusorventilsitzabschnitt (12) übergeht, wobei der Kegelstumpfabschnitt (11) mit dem Diffusor (10) einen Winkel zwischen 5° und 25° einschließt, der Absatz (13) über eine zylinderscheibenförmige Absatzwand (14) mit dem Diffusorventilsitzabschnitt (12) verbunden ist und die Absatzwand (14) rechtwinklig zu der Diffusorlängsachse ausgerichtet bzw. angeordnet ist.

2. Kugelsitzventil nach Anspruch 1,
**dadurch gekennzeichnet, dass** die Absatzwand (14) eine Breite aufweist, die zwischen 10 % und 40 % des Radius des Diffusors (10) beträgt.

3. Kugelsitzventil nach einem der vorherigen Ansprüche,
**dadurch gekennzeichnet, dass** der Diffusorventilsitzabschnitt (12) einen zumindest angenähert dem Diffusorgrunddurchmesser entsprechenden Durchmesser aufweist.

4. Einspritzeinrichtung zum Einspritzen von Kraftstoff aus einem Hochdruckspeicher in einen Brennraum einer Brennkraftmaschine umfassend mindestens ein Einspritzventilglied zum Öffnen und Verschließen mindestesns einer Einspritzöffnung, weiterhin umfassend mindestens einen mit dem Einspritzventilglied hydraulisch verbundenen Steuerraum,
**dadurch gekennzeichnet, dass** der Steuerraum mit einem Entlastungsraum verbunden ist, über mindestens ein Kugelsitzventil gemäß einem der vorhergehenden Ansprüche.

5. Einspritzeinrichtung gemäß dem Anspruch 4,
**gekennzeichnet durch** mindestens einen elektromechanischen Aktor zum Betätigen des Schließelementes, wobei der elektromechanische Aktor insbesondere einen elektromagnetischen Aktor und/oder einen Piezoaktor umfasst.

## Claims

1. Ball seat valve for adjusting a throughflow of a fluid medium, having a valve seat (6) and having a rounded closing element (4), in particular a valve ball, furthermore having an inlet (7) with a prethrottle (9) and having a diffuser (10) arranged between the prethrottle (9) and the valve seat (6), wherein the inlet (7) furthermore has a constriction,
**characterized in that** the constriction has a frustoconical section (11) with a sharp-edged shoulder (13) on the side facing towards the valve seat (6), at which side the frustoconical section (11) transitions into a cylindrical diffuser valve seat section (12), wherein the frustoconical section (11) encloses an angle of between 5° and 25° with the diffuser (10), the shoulder (13) is connected to the diffuser valve seat section (12) via a cylindrical-disc-shaped shoulder wall (14), and the shoulder wall (14) is oriented or arranged at right angles to the diffuser longitudinal axis.

2. Ball seat valve according to Claim 1,
**characterized in that** the shoulder wall (14) has a width which amounts to between 10% and 40% of the radius of the diffuser (10).

3. Ball seat valve according to one of the preceding claims,
**characterized in that** the diffuser valve seat section (12) has a diameter which at least approximately corresponds to the diffuser main diameter.

4. Injection device for injecting fuel from a highpressure accumulator into a combustion chamber of an internal combustion engine, comprising at least one injection valve element for opening and closing at least one injection opening, furthermore comprising at least one control chamber which is hydraulically connected to the injection valve element,
**characterized in that** the control chamber is connected to a relief chamber via at least one ball seat valve according to one of the preceding claims.

5. Injection device according to Claim 4,
**characterized by** at least one electromechanical actuator for actuating the closing element, wherein the electromechanical actuator comprises in particular an electromagnetic actuator and/or a piezo actuator.

## Revendications

1. Soupape à siège sphérique pour le réglage d'un débit d'un milieu fluide, présentant un siège de soupape (6) et un élément de fermeture arrondi (4), en particulier une bille de soupape, présentant en outre une entrée (7) avec un pré-étranglement (9) et un diffuseur (10) disposé entre le pré-étranglement (9) et le siège de soupape (6), l'entrée (7) présentant en outre un rétrécissement,
**caractérisée en ce que** le rétrécissement présente une portion tronconique (11) avec un épaulement à arêtes vives (13) du côté tourné vers le siège de soupape (6), au niveau duquel côté la portion tronconique (11) se prolonge par une portion de siège de soupape de diffuseur cylindrique (12), la portion tronconique (11) formant avec le diffuseur (10) un angle compris entre 5° et 25°, l'épaulement (13) étant connecté à la portion de siège de soupape de diffuseur (12) par le biais d'une paroi d'épaulement (14) en forme de rondelle cylindrique et la paroi d'épaulement (14) étant disposée ou orientée à angle droit par rapport à l'axe longitudinal du diffuseur.

2. Soupape à siège sphérique selon la revendication 1,
**caractérisée en ce que** la paroi d'épaulement (14) présente une largeur qui est comprise entre 10 % et 40 % du rayon du diffuseur (10).

3. Soupape à siège sphérique selon l'une quelconque des revendications précédentes,
**caractérisée en ce que** la portion de siège de soupape de diffuseur (12) présente un diamètre correspondant au moins approximativement au diamètre de base du diffuseur.

4. Dispositif d'injection pour l'injection de carburant à partir d'un réservoir haute pression dans une chambre de combustion d'un moteur à combustion interne, comprenant au moins un organe de soupape d'injection pour ouvrir et fermer au moins une ouverture d'injection, comprenant en outre au moins un espace de commande connecté hydrauliquement à l'organe de soupape d'injection,
**caractérisé en ce que** l'espace de commande est connecté à un espace de décharge par le biais d'au moins une soupape à siège sphérique selon l'une quelconque des revendications précédentes.

5. Dispositif d'injection selon la revendication 4, **caractérisé par**
au moins un actionneur électromécanique pour actionner l'élément de fermeture, l'actionneur électromécanique comprenant en particulier un actionneur électromagnétique et/ou un actionneur piézo-électrique.
